# EUROPEAN PATENT SPECIFICATION

(11) **EP 4 530 591 B1**
(45) Date of publication and mention of the grant of the patent: **13.05.2026**
(21) Application number: 24194387.7
(22) Date of filing: 13.08.2024
(51) Int. Cl.: G01L 1/22, G01L 1/26, H01M 10/42, H01M 10/48

(54) **STRAIN SENSOR, MANUFACTURING METHOD OF STRAIN SENSOR, AND SECONDARY BATTERY EQUIPPED WITH STRAIN SENSOR**
DEHNUNGSSENSOR, HERSTELLUNGSVERFAHREN FÜR DEHNUNGSSENSOR UND SEKUNDÄRBATTERIE MIT DEHNUNGSSENSOR
CAPTEUR DE CONTRAINTE, PROCÉDÉ DE FABRICATION DE CAPTEUR DE CONTRAINTE ET BATTERIE SECONDAIRE ÉQUIPÉE D'UN CAPTEUR DE CONTRAINTE

(30) Priority: 26.09.2023 KR 20230128898
(43) Date of publication of application: 02.04.2025
(73) Proprietor: SAMSUNG SDI CO., LTD., Giheung-gu Yongin-si, Gyeonggi-do 17084 (KR)
(72) Inventor: HAN, Jong Chan, 17084 Yongin-si (KR); KIM, Gi Young, 17084 Yongin-si (KR); YU, Ki Jun, 04968 Seoul (KR); KIM, Tae Min, 13425 Seongnam-si (KR); KIM, Kyu Been, 03938 Seoul (KR)
(74) Representative: Marks & Clerk LLP

(56) References cited:
- CN-A- 112 913 068
- US-A1- 2011 226 069
- US-A1- 2016 250 015

## Description

### FIELD

Embodiments relate to a strain sensor, a manufacturing method of the strain sensor, a secondary battery equipped with the strain sensor.

### BACKGROUND

Secondary batteries are power storage systems which provide excellent energy density by converting electrical energy into chemical energy and storing the chemical energy. Compared to primary batteries which may not be recharged, secondary batteries may be recharged and may be widely used in information technology (IT) devices, such as smartphones, cellular phones, laptops, and tablet computers. Recently, to prevent environmental pollution, interest in electric vehicles has increased and, accordingly, high-capacity secondary batteries are being adopted for electric vehicles. It is desirable that these secondary batteries have characteristics such as high density, high output, and stability.

The information disclosed in this section is provided only for enhancement of understanding of the background of the disclosure and therefore it may contain information that does not form the prior art. Attention is also drawn to the disclosure of US2011/226069A and CN112913068A.

### SUMMARY

The invention provides a strain sensor as defined in claim 1 and a manufacturing method as defined in claim 5.

Embodiments provide a strain sensor capable of measuring deformation and/or swelling of a secondary battery, a manufacturing method of the strain sensor, a secondary battery equipped with the strain sensor.

A strain sensor according to one aspect of the present invention is provided as claimed in claim 1.

In some examples, a thickness of the backing part may be 10 or more times a thickness of the encapsulation part.

In some examples, the backing part may include polyimide.

In some examples, a thickness of the strain gauge may be 100 to 300 nm, and a thickness of the backing part may be 10 to 50 µm.

A manufacturing method of a strain sensor according to another aspect of the present invention is provided as claimed in claim 5.

In some examples, in preparing the SOI wafer, the single-crystal silicon thin film layer may be doped with p-type boron impurities by ion implantation at a concentration of 5e17 to 5e18 cm⁻³.

In some examples, forming the holes may include stacking the photoresist on the single-crystal silicon thin film layer, forming the hole pattern including microholes with a micrometer-scale diameter by using a light source, and dry-etching the single-crystal silicon thin film layer exposed through the hole pattern by using a reactive ion etching (RIE) process.

In some examples, a thickness of the photoresist may be 300 to 600 nm.

In some examples, the hole pattern may be configured such that the microholes have a diameter of 3 µm and are arranged at intervals of 50 µm.

In some examples, in removing the oxide film, the insulating oxide film layer may be removed by putting the SOI wafer provided with the hole pattern formed thereon into a hydrofluoric acid solution.

In some examples, moving the single-crystal silicon thin film layer may include separating the single-crystal silicon thin film layer from the base wafer layer using a polydimethylsiloxane (PDMS) stamp, spin-coating the backing part formed of a polyimide film with liquid polyimide, and then (e.g., after the spin-coating) soft-baking the backing part, and transferring the single-crystal silicon thin film layer separated by the PDMS stamp to the backing part after soft-baking.

In some examples, removing the photoresist may include removing the photoresist using acetone, and hard-baking the backing part provided with the single-crystal silicon thin film layer transferred thereto after removing the photoresist.

In some examples, for soft-baking, curing may be performed at a temperature of 100 to 110 °C for 30 to 50 seconds.

In some examples, for hard-baking, curing may be performed at a temperature of 195 to 205 °C for 2 hours.

In some examples, patterning the single-crystal silicon thin film layer may include applying the photolithography process to the single-crystal silicon thin film layer, and forming the strain gauge by dry-etching the single-crystal silicon thin film layer into a zigzag shape or a serpentine shape using a reactive ion etching (RIE) process.

In some examples, in forming the wiring part, the metal film may include at least one of copper, aluminum, gold, or silver.

In some examples, forming the encapsulation part may include stacking epoxy on the backing part configured to surround the strain gauge 20 and the wiring part, and processing the epoxy stacked on the backing part into a shape of the encapsulation part through the photolithography process to expose a portion of the wiring part.

A secondary battery according to yet another aspect of the present invention is provided as claimed in claim 12.

At least some of the above and other features of the invention are set out in the claims.

### BRIEF DESCRIPTION OF THE DRAWINGS

The accompanying drawings, which are incorporated in this specification, illustrate example embodiments and serve to further illustrate the technical ideas of the disclosure in conjunction with the detailed description of example embodiments that follows, and the disclosure is not to be construed as limited to what is shown in such drawings. In the drawings:
FIG. 1 is a plan view showing a strain sensor according to one embodiment;
FIG. 2 is a side sectional view of the strain sensor of FIG. 1 according to one embodiment;
FIG. 3 is a plan view showing a strain gauge installed on a backing part according to one embodiment;
FIG. 4 is a side view showing a secondary battery equipped with the strain sensor according to one embodiment;
FIG. 5 is a side view showing a state in which the strain sensor is bent, as a case of the secondary battery of FIG. 4 expands, according to one embodiment;
FIG. 6 is a perspective view showing the strain sensor installed on the exterior of the expanded case of FIG. 5 according to one embodiment;
FIG. 7 is a table representing the resistance change and gauge factor of the strain sensor depending on a radius of curvature according to one embodiment;
FIG. 8 is a graph representing the resistance value (Ω) of the strain sensor over time if the strain sensor detects a swelling phenomenon, according to one embodiment;
FIG. 9 is a flowchart representing a manufacturing method of the strain sensor according to one embodiment;
FIG. 10 is a cross-sectional view showing an SOI wafer according to one embodiment;
FIG. 11 is a cross-sectional view showing a state in which a hole pattern is formed in a single-crystal silicon thin film layer according to one embodiment;
FIG. 12 is a cross-sectional view showing a state in which an insulating oxide film layer is removed from the SOI layer according to one embodiment;
FIG. 13 is a cross-sectional view showing a state in which a PDMS stamp, according to one embodiment, lifts the single-crystal silicon thin film layer and a photoresist above a base wafer layer;
FIG. 14 is a cross-sectional view showing a state in which the PDMS stamp, according to one embodiment, places the single-crystal silicon thin film layer and the photoresist on the backing part (e.g., shown in FIG. 5);
FIG. 15 is a cross-sectional view showing a state in which only the single-crystal silicon thin film layer is placed on the backing part according to one embodiment;
FIG. 16 is a cross-sectional view showing a state in which the strain gauge formed by patterning is placed on the backing part according to one embodiment;
FIG. 17 is a cross-sectional view showing a state in which a wiring part is in ohmic contact with the strain gauge according to one embodiment; and
FIG. 18 is a cross-sectional view showing a state in which an encapsulation part is formed on the backing part while surrounding the strain gauge and the wiring part according to one embodiment.

### DETAILED DESCRIPTION

Hereinafter, example embodiments will be described in detail with reference to the accompanying drawings.

Embodiments are provided to more fully illustrate the disclosure to a person having ordinary skill in the art. The following embodiments may be modified in various other forms, and the scope of the disclosure is not limited to the following embodiments. The embodiments are provided to make the disclosure more complete and to completely convey the idea of the disclosure to those skilled in the art.

In the accompanying drawings, the thickness or size of each layer is exaggerated for clarity of description, and the same reference symbols in the drawings refer to the same elements. As used herein, the term "and/or" includes any one of the enumerated items and any combination of one or more thereof. As used herein, the term "connected" refers not only to direct connection between members A and B but also to indirect connection between members A and B with member C interposed therebetween.

The terms used in the specification are intended to describe specific embodiments and are not intended to limit the disclosure. As used herein, singular forms may include plural forms, unless the context clearly indicates otherwise. As used herein, the terms "comprise" (or "include") and/or "comprising" (or "including") are intended to specify the presence of stated figures, numbers, steps, operations, members, elements, and/or groups thereof and do not exclude the presence or addition of one or more other figures, numbers, steps, operations, members, elements, and/or groups.

While terms such as first and second are used herein to describe various members, parts, regions, layers, and/or portions, the members, the parts, the regions, the layers, and/or the portions are not to be limited by the terms. The terms are used only to distinguish one member, one part, one region, one layer, or one portion from another member, another part, another region, another layer, or another portion. Thus, a first member, a first part, a first region, a first layer, or a first portion hereinafter described may refer to a second member, a second part, a second region, a second layer, or a second portion without departing from the teachings of the disclosure.

Terms related to space, such as "beneath," "below," "lower," "above," and "upper," may be utilized to facilitate understanding of one element or feature shown in the drawings as different from another element or feature. The terms related to space are intended to facilitate understanding of the disclosure in various states of process or use and are not intended to limit the disclosure. For example, if an element or feature in a figure is inverted, an element or feature described as "beneath" or "below" becomes "above" or "upper." Thus, "beneath" is a concept that encompasses "above" or "below".

Example embodiments will be described in detail with reference to the accompanying drawings so that those skilled in the art may practice the present disclosure with ease.

Herein, the same reference numbers are given to parts having similar configurations and operations throughout the specification. Further, when a part is referred to as being electrically coupled to another part, it may be directly coupled to the other part, or intervening elements may be present therebetween.

As discussed herein, it is desirable that secondary batteries have characteristics such as high density, high output, and stability. An electrolyte inside the secondary battery can be oxidized and thus generates gas, thereby causing a swelling phenomenon in which the gas fills the inside of the secondary battery. If this swelling phenomenon occurs and the battery expands, the risk of explosion of the secondary battery increases and, accordingly, it is desirable to introduce technology to measure the swelling phenomenon in real time.

Hereinafter, a strain sensor 1, according to some embodiments, will be described with reference to the accompanying drawings.

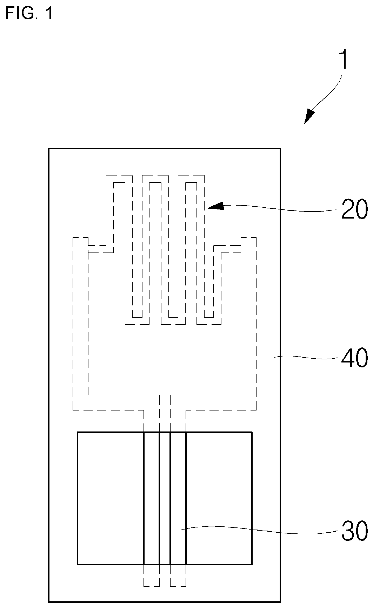

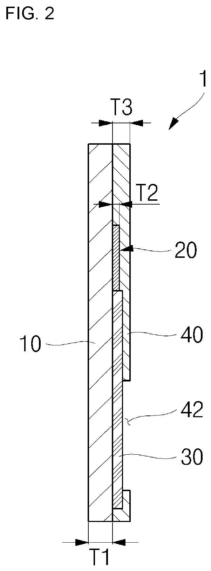

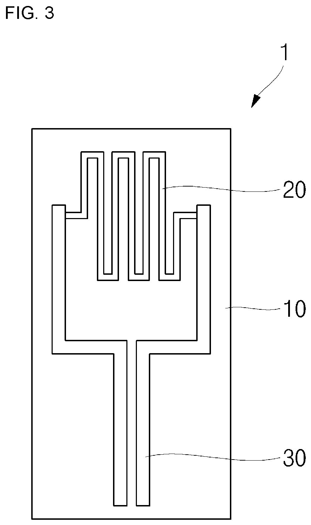

FIG. 1 is a plan view showing the strain sensor 1 according to one embodiment. FIG. 2 is a side sectional view of the strain sensor 1 according to one embodiment. FIG. 3 is a plan view showing a strain gauge 20 installed on a backing part 10 according to one embodiment.

As shown in FIGs. 1 to 3, the strain sensor 1, according to one embodiment, may use a single-crystal silicon-based strain gauge 20, and may respond sensitively to slight deformation, thereby being capable of improving accuracy in measurement. The single-crystal silicon-based strain gauge 20 may have a gauge factor that is 30 or more times that of metal-based strain sensors, thereby improving accuracy in measurement.

To explain some advantages of the strain sensor 1, according to some embodiments, in more detail, the strain sensor 1 may have improved sensitivity and reliability, may enable multi-axis detection, and may easily detect swelling of a secondary battery 200.

The strain sensor 1, according to one embodiment, may use the single-crystal silicon-based strain gauge 20, and may thus respond sensitively to slight deformation. Further, because the strain gauge 20 may have a shape which is curved at a plurality of positions, the strain gauge 20 may detect multi-axis strain. Therefore, the strain sensor 1 may accurately detect deformation in the x-axis and y-axis directions.

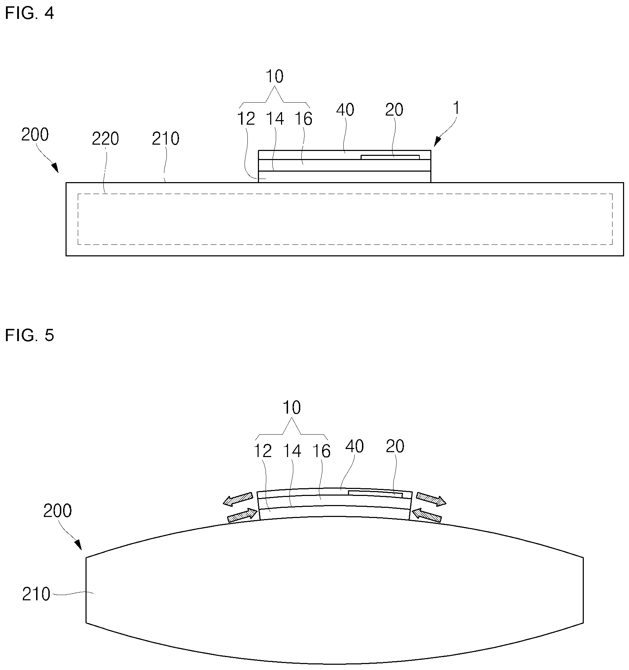

Further, the strain sensor 1, in some embodiments, may be used to detect and measure battery swelling. By attaching the strain sensor 1 to a case 210 of the secondary battery 200 (e.g., as shown in FIG. 4), the strain sensor 1 may detect deformation of the case 210 due to the swelling phenomenon, and may respond rapidly to the deformation of the case 210.

The strain sensor 1 includes the backing part 10, the strain gauge 20, a wiring part 30, and an encapsulation part 40.

The backing part 10 may be manufactured using a polymer substrate. The backing part 10 according to some embodiments may include polyimide.

Further, the thickness of the backing part 10 may be adjusted to control strain applied to the strain gauge 20. The backing part 10 may function to maintain the shape of the strain sensor 1. Strain applied to the strain gauge 20 may be controlled by adjusting the thickness of the backing part 10. Even at the same radius of curvature, without wishing to be bound by any particular theory, as the thickness of the backing part 10 increases, a greater strain may be applied to the strain gauge 20 and may thus increase sensitivity, but there may be a risk that the strain gauge 20 formed of single-crystal silicon having a very high Young's modulus will be damaged. A polyimide film having a thickness of 10 to 50 µm may be used as the backing part 10. The backing part 10, according to one embodiment, may use a polyimide film having a thickness of 25 µm. As discussed herein, as the thickness of the backing part 10 increases, a greater strain may be applied to the strain gauge 20 and may thus increase sensitivity.

Further, the backing part 10 may be attached to the exterior of the case 210 of the secondary battery 200, which will be described later.

The backing part 10 may be one of the elements used in the strain sensor 1, and may serve to support and protect the strain gauge 20. Polyimide, which may be used as a material for the backing part 10, is a flexible polymer material having high temperature durability.

Further, the backing part 10, according to one embodiment, may have flexibility, thermal durability, insulating properties, and chemical stability.

In some examples, the backing part 10 formed of polyimide may have excellent flexibility, and may thus absorb strain applied to the strain gauge 20 and reduce distortion. Therefore, reliability and accuracy of the strain sensor 1 may be improved. Further, the backing part 10 may have thermal durability, and may thus improve stability of the strain sensor 1 so that the strain sensor 1 may be operated at high temperatures. In addition, the backing part 10 may have excellent insulating properties, and may thus protect the strain gauge 20 and other elements from external factors. Moreover, the backing part 10, according to one embodiment, may have excellent resistance to various chemical substances, and may maintain stability in the presence of moisture, solvents, acids, alkalis, and the like.

The backing part 10 as shown in FIG. 4, includes a first deformation layer 12 installed and/or disposed so as to be in contact with the exterior of the secondary battery 200, a second deformation layer 16 located above the first deformation layer 12, and a boundary layer 14 located between the first deformation layer 12 and the second deformation layer 16.

Due to and/or in response to the swelling phenomenon of the secondary battery 200, the first deformation layer 12 is configured to undergo compressive strain, and the second deformation layer 16 is configured to undergo tensile strain (e.g., as shown in FIG. 5). If the strain sensor 1 is installed on the case 210 of the secondary battery 200, the first deformation layer 12 is located above the case 210, the boundary layer 14 is located above the first deformation layer 12, and the second deformation layer 16 is located above the boundary layer 14.

If the case 210 is convexly expanded, the strain sensor 1 attached to the exterior of the case 210 may also be deformed along the case 210 and may have a curved shape. At this time, the first deformation layer 12 of the backing part 10 in contact with the case 210 is compressed, and the second deformation layer 16 is stretched.

Further, the boundary layer 14 may be a portion which is neither compressed nor stretched, and may be referred to as a neutral mechanical plane. The neutral mechanical plane represents a point where a material is minimally deformed or not deformed.

The neutral mechanical plane, which is the boundary layer 14 shown in FIG. 5, refers to a plane located between the first deformation layer 12 and the second deformation layer 16. The plane of the boundary layer 14 may be an area where deformation is minimized or an undeformed state is maintained, and even if strain occurs, the corresponding plane may hardly be deformed.

Strains above and below the neutral mechanical plane may occur differently, and this may affect the sensitivity and performance of the strain gauge 20. The neutral mechanical plane may be used as a reference point for strain measurement.

The strain gauge 20, according to at least one embodiment, is located above the boundary layer 14. The strain gauge 20 may be placed in contact with the exterior of the second deformation layer 16 located above the boundary layer 14.

The strain gauge 20 may be modified as appropriate within the technical idea of being placed on the backing part 10 and being formed of single-crystal silicon. The strain gauge 20, according to at least one embodiment, may be manufactured using an SOI wafer 100, which will be described later.

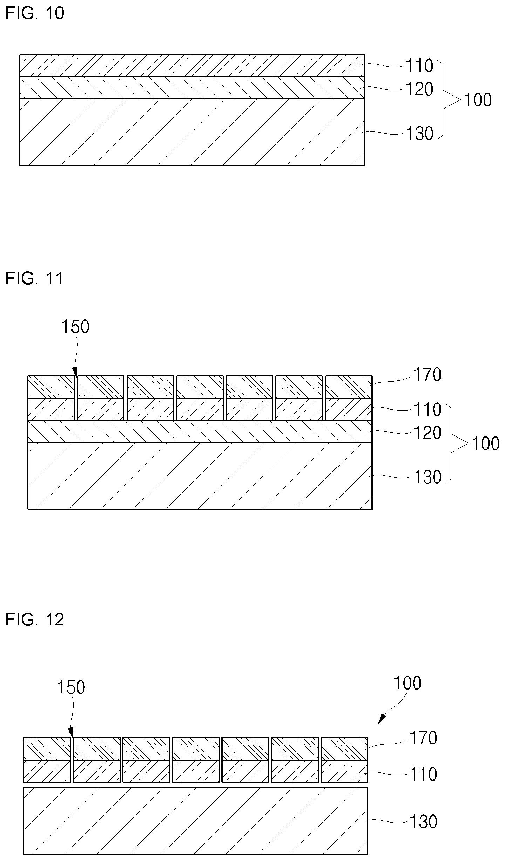

Referring to FIG. 10, the strain gauge 20 may be prepared by separating a single-crystal silicon thin film layer 110 having a thickness of 100 to 300 nm from a base wafer layer 130 and then transferring the single-crystal silicon thin film layer 110 to the backing part 10 (e.g., as shown in FIG. 2). The single-crystal silicon thin film layer 110 may have a positive gauge factor through implantation of p-type boron impurities. As the concentration of the boron impurities increases, the gauge factor may decrease, but temperature sensitivity may also decrease and may bring about an advantage in ohmic contact with metal wiring.

The strain gauge 20 may have a zigzag shape or a serpentine shape. Unlike a straight structure, the strain gauge 20, having a shape curved at a plurality of positions, may detect x-axis and y-axis tension. Further, the initial resistance of the strain sensor 1 may be controlled by adjusting the overall length and thickness of the strain gauge 20. The strain gauge 20, according to one embodiment, may have an impurity concentration of 5e18 cm⁻³ in a silicon layer having a thickness of 300 nm, and may ensure initial resistance of the strain sensor 1 of 19 to 21 kΩ, thereby ensuring a high gauge factor and low temperature sensitivity.

The serpentine structure of the strain gauge 20 is a special type of pattern used in the strain sensor 1. The structure of the strain gauge 20, according to one embodiment, may have a twisting shape, unlike general straight strain gauges, and may be called a serpentine structure. The serpentine structure is mainly designed in the form of a long line, and may include multiple bends and inversions. If strain is applied to the strain gauge 20, which has a bent and inverted shape, the strain gauge 20 may detect a wider range of strain compared to the straight structure, and may detect both x-axis and y-axis tensions.

The wiring part 30 (e.g., as shown in FIG. 2) along with the strain gauge 20 may be stacked on the backing part 10, and may be modified as appropriate within the technical idea of being electrically connected to the strain gauge 20. Although the wiring part 30 according to one embodiment may use a copper film, it may be replaced with aluminum (Al), gold foil, silver foil, and the like that are capable of coming into ohmic contact with the strain gauge 20.

The wiring part 30 may have a thickness of 30% to 200% of the thickness of the strain gauge 20 for contact with the strain gauge 20 formed of single-crystal silicon having a thickness of 100 to 300 nm.

The encapsulation part 40 is modified as appropriate within the technical idea of surrounding the strain gauge 20 and the wiring part 30 except for excluding a portion of the wiring part 30, and being fixed to the backing part 10. The encapsulation part 40, according to one embodiment, may be formed from at least one of polyimide or SU-8, and may protect the strain gauge 20 formed of single-crystal silicon from external shock.

The encapsulation part 40, according to one embodiment, may use SU-8, which is an epoxy-based material having a Young's modulus similar to polyimide, which may be the material for the backing part 10. Because the thickness of the encapsulation part 40 may affect the sensitivity of the strain gauge 20 used as part of the strain sensor 1, the encapsulation part 40 may be prepared to have a thickness within 10% of the thickness of the backing part 10.

SU-8 may be used as the material for the encapsulation part 40, and may also act as a negative photosensitizer. Therefore, the shape of a wiring connection hole 42 may be easily formed through a photolithography process using SU-8. The wiring part 30 for connection to external wiring may be easily exposed through the wiring connection hole 42.

The thickness of the backing part 10 may be set to a first thickness T1, the thickness of the strain gauge 20 may be set to a second thickness T2, and the thickness of the encapsulation part 40 may be set to a third thickness T3 (e.g., as shown in FIG. 2). The first thickness T1, which is the thickness of the backing part 10 according to one embodiment, may be 10 or more times the third thickness T3, which is the thickness of the encapsulation part 40. The second thickness T2, which is the thickness of the strain gauge 20, may be 100 to 300 nm, and the first thickness T1, which is the thickness of the backing part 10, may be 10 to 50 µm.

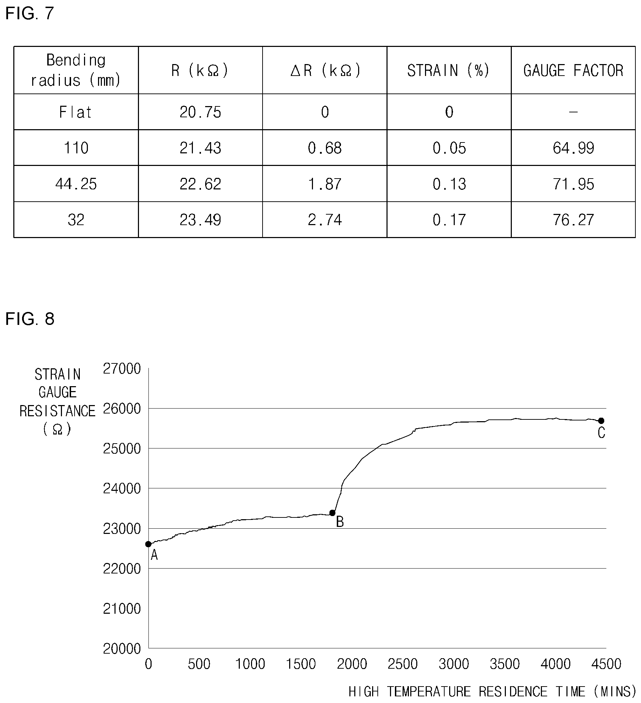

FIG. 7 is a table representing the resistance change and gauge factor of the strain sensor, in accordance with strain sensor 1 discussed herein, depending on a radius of curvature, according to one embodiment.

As shown in FIG. 7, the strain gauge 20 using the single-crystal silicon may show not only a change in resistance due to the geometric change of the strain gauge 20 but also a large change in resistance due to the piezoelectric effect, as set forth in the table.

The strain sensor 1, according to one embodiment, may show a gauge factor of about 70 even under a low strain of 0.05 to 0.2%, and this gauge factor may indicate 30 or more times sensitivity relative to a metal-based strain sensor (e.g., having a gauge factor of 2.1, Tokyo Sokki Kenkyuio Co.) widely used in the industry.

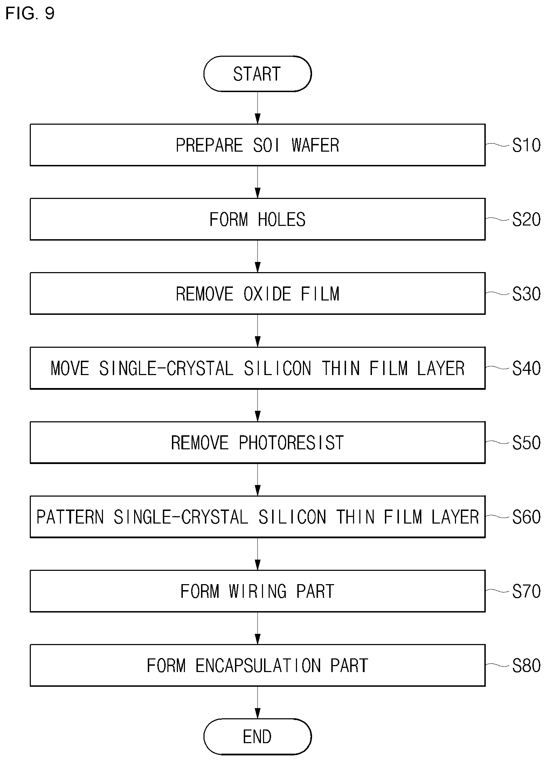

Hereinafter, a manufacturing method of the strain sensor 1, according to some embodiments, will be described with reference to the accompanying drawings. FIG. 9 is a flowchart representing a manufacturing method of the strain sensor 1 according to one embodiment.

As shown in FIG. 9, the manufacturing method of the strain sensor 1 includes preparing the SOI wafer at act S10, forming holes at act S20, removing an oxide film at act S30, moving the single-crystal silicon thin film layer 110 at act S40, removing a photoresist at act S50, patterning the single-crystal silicon thin film layer (e.g., single-crystal silicon thin film layer 110) at act S60, forming the wiring part (e.g., wiring part 30) at act S70, and forming the encapsulation part (e.g., encapsulation part 40) at act S80.

FIG. 10 is a cross-sectional view showing the SOI wafer 100 according to one embodiment. As shown in FIG. 10, in preparing the SOI wafer (e.g., at act S10), the silicon-on-insulator (SOI) wafer may be prepared in which the single-crystal silicon thin film layer 110, an insulating oxide film layer 120, and the base wafer layer 130 are sequentially stacked.

In preparing the SOI wafer (e.g., at act S10), the single-crystal silicon thin film layer 110 may be doped with p-type boron impurities by ion implantation at a concentration of 5e17 to 5e18 cm⁻³.

The single-crystal silicon thin film layer 110 may be formed of a silicon nanomembrane (SiNM). The single-crystal silicon thin film layer 110, according to one embodiment, may be a very thin and flexible single-crystal silicon thin film, and may have a nanometer-scale thickness.

The insulating oxide film layer 120, according to at least one embodiment, may be formed of silicon dioxide (SiO₂). The insulating oxide film layer 120 may act as an insulator which can serve to electrically insulate and protect silicon.

The base wafer layer 130 may be formed of silicon (Si). Silicon may be stable at high temperatures, may have high conductivity, and may have excellent optical and mechanical properties.

In preparing the SOI wafer (e.g., at act S10), the single-crystal silicon thin film layer 110 may be doped with the p-type boron impurities to provide characteristics necessary for operation of the strain sensor 1. Doping is a process of introducing atoms or ions into silicon to change the electrical properties of silicon.

Boron is an element used to make p-type silicon. Ion implantation may be a process of introducing boron ions into the single-crystal silicon thin film layer 110, and here, the concentration of boron ions may be set to 5e18 cm⁻³. The electrical properties of silicon may be changed by introducing boron ions into silicon. The doped silicon may be p-type silicon having increased conductivity, and may obtain a necessary gauge factor if the doped silicon is operated as the strain gauge 20 of the strain sensor 1.

As described above, in preparing the SOI wafer (e.g., at act S10), a process of adjusting the electrical characteristics of the strain sensor 1 may be carried out by doping the single-crystal silicon thin film layer 110 with boron impurities through ion implantation.

FIG. 11 is a cross-sectional view showing a state in which a hole pattern 150 is formed in the single-crystal silicon thin film layer 110 according to one embodiment. As shown in FIG. 11, forming the holes (e.g., at act S20) may be modified as appropriate within the technical idea of forming the hole pattern 150 in the single-crystal silicon thin film layer 110 using the photolithography process.

Forming the holes (e.g., at act S20), according to one embodiment, may include stacking a photoresist (PR) 170 on the single-crystal silicon thin film layer 110, forming the hole pattern 150, and dry-etching the single-crystal silicon thin film layer 110. The thickness of the photoresist 170, according to one embodiment, may be 300 to 600 nm.

Stacking the photoresist (PR) 170 on the single-crystal silicon thin film layer 110 will now be described. The photoresist 170 may be a light-sensitive material, and may be used in semiconductor manufacturing and mask manufacturing processes. The photoresist 170 may be used to form a predefined pattern in the photolithography process.

Forming the hole pattern 150 having microholes with a micrometer-scale diameter using a light source after stacking the photoresist (PR) 170 on the single-crystal silicon thin film layer 110 will be described herein. The hole pattern 150 having the microholes with the micrometer-scale diameter may be obtained through the photolithography process.

The microholes may be formed by patterning the photoresist having a thickness of 300 nm to 600 nm and then piercing the single-crystal silicon thin film layer 110 in a corresponding pattern through a reactive ion etching process. In the hole pattern 150 according to one embodiment, the microholes having a diameter of 3 µm may be arranged at intervals of 50 µm. The hole pattern 150 may include the microholes having a micrometer-scale diameter, and may be an element configured to form the strain gauge 20 of the strain sensor 1.

The photoresist 170 used to form the hole pattern 150 may cause a chemical reaction in portions thereof exposed to light, and may form the desired hole pattern 150.

Because the photoresist 170 may serve as a cushioning material configured to prevent cracks which may occur in the single-crystal silicon thin film layer 110, the photoresist 170 may be left without being removed even after the photolithography process. The hole pattern 150 may be first formed in the photoresist 170, and then, the hole pattern 150 may also be formed in the single-crystal silicon thin film layer 110 through etching.

The single-crystal silicon thin film layer 110 exposed through the hole pattern 150 may be dry-etched using a reactive ion etching (RIE) process. The RIE process may be a process of removing a material using reactive ions, and silicon in areas exposed through the hole pattern 150 may be removed by etching. Silicon may be removed from portions of the single-crystal silicon thin film layer 110 exposed through the hole pattern 150 by etching through the RIE process.

After dry-etching the single-crystal silicon thin film layer 110, the insulating oxide film layer 120 below the single-crystal silicon thin film layer 110 may be exposed. If the single-crystal silicon thin film layer 110 is exposed after dry-etching, removing the oxide film (e.g., at act S30) may be performed.

FIG. 12 is a cross-sectional view showing a state in which the insulating oxide film layer 120 is removed from the SOI wafer 100 according to one embodiment. As shown in FIG. 12, in removing the oxide film (e.g., at act S30), the insulating oxide film layer 120 may be removed from the SOI wafer 100.

In removing the oxide film (e.g., at act S30), according to one embodiment, the insulating oxide film layer 120 may be removed by placing the SOI wafer 100 provided with the hole pattern 150 formed thereon in a hydrofluoric acid solution. The insulating oxide film layer 120 may be wet-etched by soaking the SOI wafer 100 on which the microholes are patterned in the hydrofluoric acid solution for about 20 minutes, and thereby, the single-crystal silicon thin film layer 110 having a thickness of 300 nm may be separated from the base wafer layer 130.

Hydrofluoric acid may be an acidic solution used in the wet etching process, and may interact with the insulating oxide film layer 120 to remove the insulating oxide film layer 120.

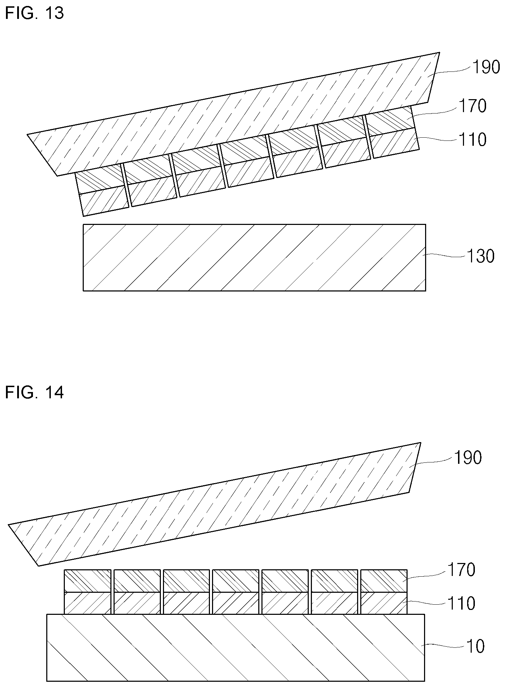

FIG. 13 is a cross-sectional view showing a state in which a PDMS stamp 190, according to one embodiment, lifts the single-crystal silicon thin film layer 110 and the photoresist 170 above the base wafer layer 130. FIG. 14 is a cross-sectional view showing a state in which the PDMS stamp 190, according to one embodiment, places the single-crystal silicon thin film layer 110 and the photoresist 170 on the backing part 10.

As shown in FIGs. 13 and 14, in moving the single-crystal silicon thin film layer 110 (e.g., at act S40), the single-crystal silicon thin film layer 110 may be moved from the base wafer layer 130 to the backing part 10. Moving the single-crystal silicon thin film layer 110 (e.g., at act S40), according to one embodiment, may include separating the single-crystal silicon thin film layer 110 from the base wafer layer 130, coating the backing part 10 with liquid polyimide and then soft-baking the backing part 10, and transferring the single-crystal silicon thin film layer 110 to the backing part 10 after soft-baking.

Separating the single-crystal silicon thin film layer 110 from the base wafer layer 130 using the polydimethylsiloxane (PDMS) stamp 190 will be described now. The PDMS stamp 190 may be a type of elastomer stamp. The elastomer stamp may be a flexible and elastic stamp formed of an elastomer material, and may be mainly used for nanopattern and micropattern transfer, printing, adhesion, and the like.

The PDMS stamp 190 may be a stamp formed of a flexible and transparent silicone-based rubber material. PDMS may be biologically safe and may be used in various application fields due to resistance and elasticity thereof.

The PDMS stamp 190 may be a stamp manufactured using polydimethylsiloxane, which is a silicone-based elastomer, and may transfer the single-crystal silicon thin film layer 110 from the base wafer layer 130 to the backing part 10 according to one embodiment.

The PDMS stamp 190 according to one embodiment may be manufactured by mixing a PDMS base and a curing agent in a ratio of 4:1, and curing the mixture in an oven at a temperature of 40 °C for 24 hours.

The PDMS stamp 190, according to one embodiment, may have flexibility to be bent and deformed into various shapes because PDMS is flexible and elastic. Further, the PDMS stamp 190 may have excellent adhesion to other surfaces. Thereby, the PDMS stamp 190 may be used to accurately transfer or attach a desired pattern.

In order to increase adhesion of the backing part 10 before transferring the single-crystal silicon thin film layer 110 to the backing part 10, the backing part 10 formed of the polyimide film may be spin-coated with liquid polyimide, and may then be soft-baked. In soft-baking, curing may be performed at a temperature of 100 to 110 °C for 30 to 50 seconds.

In order to increase adhesion between the backing part 10 and the single-crystal silicon thin film layer 110, the backing part 10 may be coated with a liquid adhesive polymer having a thickness of 1 to 25 µm or more, and may then be cured in a heater at a temperature of 110 °C for 30 to 50 seconds. The liquid adhesive polymer may be one of polyimide, polyurethane, and/or epoxy.

In one embodiment, the backing part 10, such as formed of a polyimide film of a thickness of 25 µm, may be spin-coated with liquid polyimide. Spin coating is a process of applying a liquid material to a rotating substrate or wafer at a constant speed.

After coating of the backing part 10 with liquid polyimide has been completed, the backing part 10 may be soft-baked. In soft-baking, liquid polyimide spin-coated on the backing part 10 may be heated to an appropriate temperature to remove a portion of a solvent. In this process, adhesive strength of polyimide becomes stronger than that of the PDMS stamp 190.

Then, the single-crystal silicon thin film layer 110 separated by the PDMS stamp 190 may be transferred to the backing part 10 in which soft-baking has been completed. Because the adhesive strength of the soft-baked liquid polyimide may be stronger than the adhesive strength of the PDMS stamp 190, transfer of the single-crystal silicon thin film layer 110 may be carried out.

As discussed herein, the single-crystal silicon thin film layer 110 separated by the PDMS stamp 190 may be transferred to the backing part 10 in which soft-baking has been completed. The soft-baked liquid polyimide may have stronger adhesion to single-crystal silicon, and make transfer of single-crystal silicon thin film layer 110 to the backing part 10 possible.

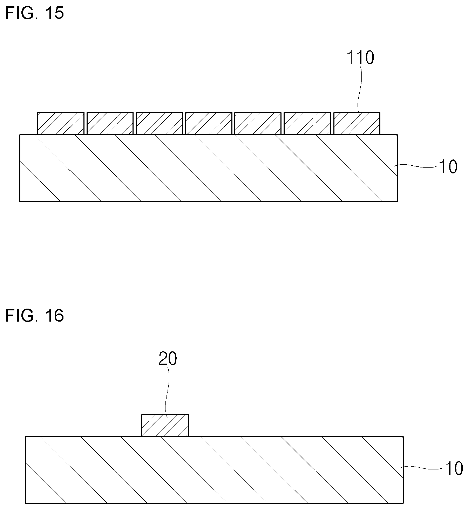

FIG. 15 is a cross-sectional view showing a state in which only the single-crystal silicon thin film layer 110 is placed on the backing part 10 according to one embodiment. As shown in FIG. 15, in removing the photoresist 170 (e.g., at act S50), the photoresist 170 remaining on the single-crystal silicon thin film layer 110 may be removed.

After moving the single-crystal silicon thin film layer 110 to the backing part 10, the photoresist 170 remaining on the single-crystal silicon thin film layer 110 may be removed using acetone. The photoresist 170 may be a light-sensitive material used for masking or pattern formation. The surface of the single-crystal silicon thin film layer 110 may be cleaned by removing the photoresist 170 therefrom. Acetone, which is a generally used solvent, may be effective in dissolving the photoresist 170.

After removing the photoresist 170, the backing part 10 to which the single-crystal silicon thin film layer 110 is transferred may be hard-baked. In hard-baking, polyimide may be heated to an appropriate temperature so that the solvent may be removed and polyimide may be converted to a solid state. Hard-baked polyimide may form a stable bond with single-crystal silicon and reinforce the structure of the strain sensor 1.

In hard-baking, curing may be performed at a temperature of 195 to 205 °C for 2 hours. In one embodiment, the liquid adhesive polymer may be cured in an oven at a temperature of 200 °C for 2 hours.

In removing the photoresist 170 (e.g., at act S50), the photoresist 170 remaining on the transferred single-crystal silicon thin film layer 110 may be removed, and liquid polyimide may be hard-baked to ensure stability.

FIG. 16 is a cross-sectional view showing a state in which the strain gauge 20 formed by patterning the single-crystal silicon thin film layer 110 (e.g., at act S60) is placed on the backing part 10 according to one embodiment. As shown in FIG. 16, in patterning the single-crystal silicon thin film layer 110 (e.g., at act S60), the strain gauge 20 may be formed in the single-crystal silicon thin film layer 10 using masking and etching processes.

"Patterning" may refer to a process of procedurally forming a pattern on a surface or a material so as to create a desired pattern, and may be a term mainly used in the semiconductor manufacturing process.

Patterning the single-crystal silicon thin film layer 110 (e.g., at act S60) according to one embodiment may include applying the photolithography process to the single-crystal silicon thin film layer 110, and forming the strain gauge 20 by dry-etching the single-crystal silicon thin film layer 110.

Applying the photolithography process to the single-crystal silicon thin film layer 110 will now be described. The photolithography process is a process of using a light-sensitive material (e.g., the photoresist 170) to form a predetermined pattern. After coating the photoresist 170 on the single-crystal silicon thin film layer 110, the photoresist 170 may be patterned into a desired shape through UV exposure. The shape of the patterned photoresist 170 may be a zigzag shape or a serpentine shape.

Thereafter, the strain gauge 20 may be formed by dry-etching the single-crystal silicon thin film layer 110 into the zigzag shape or the serpentine shape using the reactive ion etching (RIE) process.

Reactive ion etching (RIE) is a method of etching a silicon surface using ionized particles by generating plasma. The serpentine shape may be formed by partially etching single-crystal silicon using the patterned photoresist 170 as a mask. In one embodiment, the serpentine-shaped pattern may be obtained by removing parts of the single-crystal silicon thin film layer 110.

The serpentine structure may be designed with a certain twisted pattern so as to allow the strain gauge 20 to detect tension in the x-axis and y-axis directions.

The initial resistance of the strain sensor 1 may be adjusted through the above patterning process. In more detail, the initial resistance value of the strain sensor 1 may be controlled by adjusting the overall length and thickness of the serpentine structure.

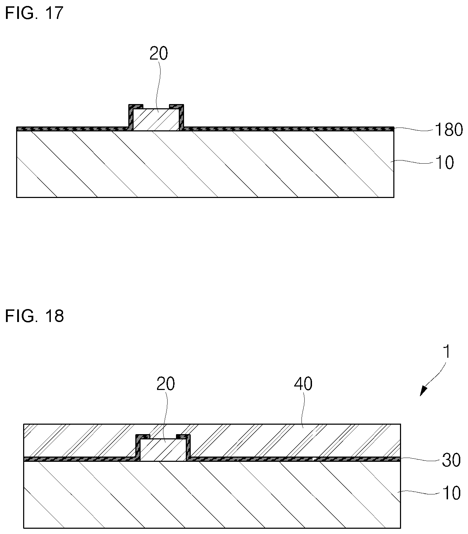

FIG. 17 is a cross-sectional view showing a state in which the wiring part 30 is in ohmic contact with the strain gauge 21 according to one embodiment. As shown in FIG. 17, forming the wiring part 30 (e.g., at act S70) is a process of depositing a metal film 180 used as the wiring part 30 on the exterior of the backing part 10 and forming the wiring part 30 through the photolithography process.

In the state in which the strain gauge 20 is placed on the backing part 10, a copper film serving as metal wiring may be deposited thereon, and may then be patterned through the photolithography process. The wiring part 30, which is the metal wiring, may provide electrical connection between the strain sensor 1 and an external system. The wiring part 30 may be mainly formed of copper or other highly conductive metals.

In forming the wiring part 30 (e.g., at act S70) according to one embodiment, the metal film 180 may include at least one of copper, aluminum, gold, or silver.

First, the metal wiring may be formed through a copper film deposition process. Copper is one of the metal materials generally used in strain sensors due to excellent conductivity and low price. The copper film may be deposited on the exterior of the backing part 10 using deposition equipment, and may be electrically connected to the strain gauge 20.

Thereafter, a pattern of the metal wiring may be formed through the photolithography process. In the photolithography process, a desired pattern may be formed using a light-sensitive material (e.g., photoresist 170). After coating the photoresist 170, the photoresist 170 may be patterned to determine the position of the wiring part 30 through UV exposure.

That is, a desired metal wiring pattern may be formed by etching the copper film using the photoresist 170 patterned through the photolithography process as a mask.

Thereafter, the copper film may be partially etched through an etching process. If the etching process is performed using the patterned photoresist 170 as a mask, only portions of the copper film protected by the mask may remain to form the wiring part 30.

FIG. 18 is a cross-sectional view showing a state in which the encapsulation part 40 is formed on the backing part 10 while surrounding the strain gauge 20 and the wiring part 30 according to at least one embodiment. As shown in FIG. 18, in forming the encapsulation part 40 (e.g., at act S80), the encapsulation part 40 may be formed on the backing part 10 while surrounding the strain gauge 20 and the wiring part 30.

Using SU-8, which is an epoxy-based resin having a Young's modulus similar to that of polyimide, the encapsulation part 40 may be formed along with formation of the wiring connection hole 42 configured to expose a portion of the wiring part 30 for connection to external wiring.

The encapsulation part 40 may be formed of SU-8, which is the epoxy-based resin having the Young's modulus similar to that of polyimide. Polyimide may have excellent heat resistance and durability, and may serve to protect the strain sensor 1 and provide stability of the strain sensor 1.

Coating of polyimide or SU-8 and patterning thereof may be achieved through the photolithography process. Through photolithography, a desired pattern may be formed using a mask, and the pattern may be produced through exposure and postprocessing.

The encapsulation part 40 may serve to protect the strain sensor 1 from external shock and environmental factors and to secure stability of the strain sensor 1.

Forming the encapsulation part 40 (e.g., at act S80) according to one embodiment may include stacking epoxy on the backing part 10 while surrounding the strain gauge 20 and the wiring part 30, and processing the epoxy stacked on the backing part 10 into the shape of the encapsulation part 40 through the photolithography process to expose the portion of the wiring part 30.

The encapsulation part 40 may be manufactured using various polymer materials. In general, polymer materials, such as silicone, polyurethane, epoxy resins, and the like, may be used. These polymer materials may be inexpensive and readily available, and may provide various physical and chemical properties.

Hereinafter, the secondary battery 200 equipped with the strain sensor 1, according to some embodiments, will be described with reference to the accompanying drawings.

FIG. 4 is a side view showing the secondary battery 200 equipped with the strain sensor 1 according to one embodiment. FIG. 5 is a side view showing a state in which the strain sensor 1 is bent, as the case 210 expands, according to one embodiment.

As shown in FIGs. 4 and 5, for the secondary battery 200 equipped with the strain sensor 1, the strain sensor 1 may be mounted on the exterior of the case 210.

The case 210 surrounding the exterior of an electrode assembly 220 may have various shapes. The case 210 may have one of a hexahedral shape, a cylindrical shape, and/or a pouch shape. For the case 210, according to at least one embodiment, a pouch-type case 210 will be described as an example.

The strain sensor 1 may be attached to the exterior of the case 210 and may measure deformation of the case 210. The strain sensor 1 may include the strain gauge 20 formed of single-crystal silicon. The detailed configuration and manufacturing method of the strain sensor 1, having been described above with a detailed description thereof, will thus be omitted for simplicity.

FIG. 5 shows a mechanism to detect occurrence of swelling of the secondary battery 200 after attaching the strain sensor 1, according to one embodiment, to the pouch-type case 210. The length of the strain gauge 20 in an initial state in which swelling of the secondary battery 200 does not occur may be L0. In this state, if swelling occurs in the secondary battery 200, the strain sensor 1 attached to the exterior of the case 210 is in a bent state, and the upper portion of the strain sensor 1 undergoes tensile strain while the lower portion of the strain sensor 1 undergoes compressive strain, based on the boundary layer 14, which is the neutral mechanical plane.

For the strain sensor 1, according to one embodiment, the thickness of the backing part 10 may be more than 10 or more times that of the encapsulation part 40. Thus, the strain gauge 20 may be located at the upper end of the strain sensor 1, and may undergo tensile strain so that resistance may be increased, if swelling of the secondary battery 200 occurs. The backing part may be attached to the exterior of the case, in some examples.

Changes in resistance measured through the strain sensor 1 may be confirmed through a resistance measuring instrument connected to the strain sensor 1. Because strain may be proportional to a distance from the neutral mechanical plane compared to the overall thickness of the strain sensor 1, without wishing to be bound by any particular theory, the sensitivity and physical stability of the strain sensor 1 may be controlled by adjusting the thicknesses of the backing part 10 and the encapsulation part 40.

Formation of the first deformation layer 12, the boundary layer 14, and the second deformation layer 16 in the backing part 10 having a greater thickness than that of the encapsulation part 40 has been described; yet, the first deformation layer 12, the boundary layer 14, and the second deformation layer 16 may be formed throughout the total height of the strain sensor 1 including the encapsulation part 40 and the backing part 10.

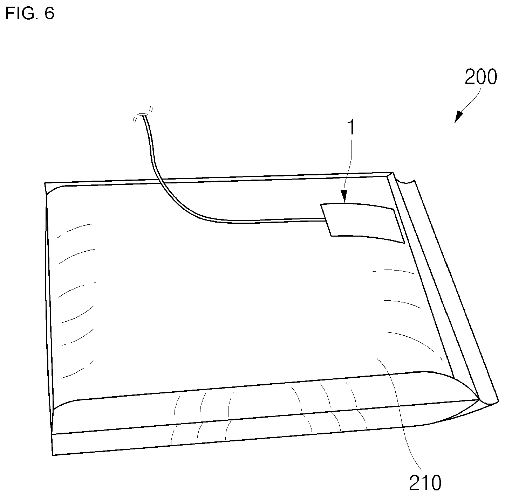

FIG. 6 is a perspective view showing the strain sensor 1 installed on the exterior of the expanded case 210 according to one embodiment. As shown in FIG. 6, the strain sensor 1 may be attached to the exterior of the pouch-type case 210 to detect swelling of the secondary battery 200.

The strain sensor 1 may be attached to the upper end of the pouch-type case 210 using an acrylic adhesive. Unlike silicone-based adhesives used in tapes, acrylic adhesives may be thin and have high strength. Therefore, if the strain sensor 1 is attached to the secondary battery 200, the acrylic adhesive may be smoothly deformed depending on deformation of the secondary battery 200, thereby reducing hysteresis of a measured value caused by repetitive bending.

That is, if the acrylic adhesive is adhered to the strain sensor 1, the acrylic adhesive may be adhered to the strain sensor 1 more strongly and to a thinner thickness, and may thus follow the deformation of the secondary battery 200 well and serve to improve performance of the strain sensor 1.

If a swelling phenomenon occurs in the pouch-type secondary battery 200, the pouch-type case 210 may not be deformed into an arc shape, but may be deformed into a plateau shape where the sides are bent more than the center. Therefore, the strain sensor 1 may be attached to a side part of the pouch-type case 210 rather than the central part thereof, and thus, more strain may be transmitted to the strain sensor 1 if swelling occurs.

The attachment position of the strain sensor may be set to the side part rather than the center of the case 210 to more accurately measure a strain value, if the case 210 of the secondary battery 200 is deformed due to the swelling phenomenon.

FIG. 8 is a graph representing the resistance value (Ω) of the strain sensor 1 over time if the strain sensor 1, according to one embodiment, detects a swelling phenomenon. As shown in FIG. 8, point A may represent the resistance of the strain sensor 1 immediately after attaching the strain sensor 1 to the case 210 at the beginning of an experiment.

Section A-B may show that the resistance of the strain sensor 1 increases due to an increase in strain applied to the strain sensor 1 due to swelling of the secondary battery 200 up to 32 hours after leaving the secondary battery 200 in a high-temperature chamber.

Point B may be a point at which rapid swelling begins to occur after 32 hours of leaving the secondary battery 200 at high temperatures, showing an increase in strain applied to the strain sensor 1, e.g., an increase in the resistance of the strain sensor 1.

Section B-C may show an increase in the resistance of the strain sensor 1 until swelling of 140% occurs based on the thickness after rapid swelling has occurred.

Point C may represent the resistance of the strain sensor 1 at a point in time when swelling is finished after 75 hours. The resistance of single-crystal silicon may be changed due to changes in temperature in addition to changes in the applied strain, but this experiment was conducted in the chamber maintained at a high temperature of 85 °C so that temperature dependence was excluded and only the resistance change due to swelling of the secondary battery 200 was confirmed.

The strain sensor 1, according to one embodiment, may detect a slight swelling phenomenon of the secondary battery 200 which may not be confirmed by the existing metal-based strain gauges having a low gauge factor. Therefore, the strain sensor 1 may inform a user of the risk of battery explosion so as to prevent the risk of explosion and fire.

As is apparent from the above description, embodiments may prevent explosion and fire of a secondary battery by detecting deformation of a case of the secondary battery due to a swelling phenomenon of the secondary battery.

Further, embodiments may respond sensitively to slight deformation using a single-crystal silicon-based strain gauge, thereby being capable of improving accuracy in measurement.

According to some embodiments, the single-crystal silicon thin film layer may be doped with p-type boron impurities by ion implantation at a concentration of 5e17 to 5e18 cm⁻³.

According to some embodiments, forming the holes may include: stacking the photoresist on the single-crystal silicon thin film layer; forming the hole pattern including microholes with a micrometer-scale diameter by using a light source; and dry-etching the single-crystal silicon thin film layer exposed through the hole pattern by using a reactive ion etching (RIE) process. A thickness of the photoresist may be 300 to 600 nm. The hole pattern may be configured such that the microholes have a diameter of 3 µm and are arranged at intervals of 50 µm. The insulating oxide film layer may be removed by putting the SOI wafer provided with the hole pattern formed thereon into a hydrofluoric acid solution.

According to some embodiments, moving the single-crystal silicon thin film layer may include: separating the single-crystal silicon thin film layer from the base wafer layer using a polydimethylsiloxane (PDMS) stamp; spin-coating the backing part formed of a polyimide film with liquid polyimide, and after the spin-coating, soft-baking the backing part; and transferring the single-crystal silicon thin film layer separated by the PDMS stamp to the backing part after the soft-baking.

According to some embodiments, removing the photoresist may include: removing the photoresist using acetone and hard-baking the backing part provided with the single-crystal silicon thin film layer transferred thereto after removing the photoresist. For the soft-baking, curing may be performed at a temperature of 100 to 110 °C for 30 to 50 seconds, and for the hard-baking, curing may be performed at a temperature of 195 to 205°C for 2 hours. Patterning the single-crystal silicon thin film layer may include: applying the photolithography process to the single-crystal silicon thin film layer; and forming the strain gauge by dry-etching the single-crystal silicon thin film layer into a zigzag shape or a serpentine shape using a reactive ion etching (RIE) process. The metal film may include at least one of copper, aluminum, gold, or silver. Forming the encapsulation part may include: stacking epoxy on the backing part configured to surround the strain gauge (e.g., strain gauge 20) and the wiring part; and processing the epoxy stacked on the backing part into a shape of the encapsulation part through the photolithography process to expose a portion of the wiring part.

The above description is only for example embodiments for implementing an example strain sensor, an example manufacturing method of the strain sensor, and an example secondary battery equipped with the strain sensor according to the disclosure. The disclosure is not limited to the above embodiments, and there is a technical aspect of the disclosure to the extent that various modifications can be made by anyone having ordinary skill in the art to which the disclosure pertains without departing from the scope of the disclosure as claimed in the following claims.

## Claims

1. A strain sensor (1) comprising:
a backing part (10) attachable to an exterior of a case of a secondary battery (200),
a strain gauge (20) installed on the backing part (10) and formed of single-crystal silicon;
a wiring part (30) stacked on the backing part (10), along with the strain gauge (20), and electrically connected to the strain gauge (20); and
an encapsulation part (40) fixed to the backing part (10) and configured to surround the strain gauge (20) and the wiring part (30) excluding a portion of the wiring part (30),
**characterized in that** the backing part (10) comprises:
a first deformation layer (12) disposed so as to be in contact with an exterior of the secondary battery (200);
a second deformation layer (16) located above the first deformation layer (12); and
a boundary layer (14) located between the first deformation layer (12) and the second deformation layer (16);
wherein the first deformation layer (12) is configured to undergo compressive strain and the second deformation layer (16) is configured to undergo tensile strain in response to a swelling phenomenon of the secondary battery (200).

2. The strain sensor (1) as claimed in claim 1, wherein a thickness of the backing part (10) is 10 or more times a thickness of the encapsulation part.

3. The strain sensor (1) as claimed in claim 1 or 2, wherein the backing part (10) comprises polyimide.

4. The strain sensor (1) as claimed in claim 1, 2 or 3, wherein:
a thickness of the strain gauge (20) is 100 to 300 nm; and
a thickness of the backing part (10) is 10 to 50 µm.

5. A manufacturing method of a strain sensor (1), comprising:
preparing a silicon-on-insulator (SOI) wafer (100) configured such that a single-crystal silicon thin film layer (110), an insulating oxide film layer (120), and a base wafer layer (130) are sequentially stacked;
forming holes by forming a hole pattern (150) in the single-crystal silicon thin film layer (110) using a photolithography process;
removing an oxide film by removing the insulating oxide film layer (120) from the SOI wafer (100);
moving the single-crystal silicon thin film layer (110) from the base wafer layer (130) to a backing part (10), wherein the backing part (10) comprises:
a first deformation layer (12) disposed so as to be in contact with an exterior of the secondary battery (200);
a second deformation layer (16) located above the first deformation layer (12); and
a boundary layer (14) located between the first deformation layer (12) and the second deformation layer (16);
removing a photoresist (170) remaining on the single-crystal silicon thin film layer (110);
patterning the single-crystal silicon thin film layer (110) to form a strain gauge (20) using masking and etching processes;
forming a wiring part (30) by depositing a metal film (180) configured to be the wiring part (30) on an exterior of the backing part (10) and by performing the photolithography process; and
forming an encapsulation part (40) on the backing part (10) configured to surround the strain gauge (20) and the wiring part (30),
wherein the first deformation layer (12) is configured to undergo compressive strain and the second deformation layer (16) is configured to undergo tensile strain in response to a swelling phenomenon of the secondary battery (200).

6. The manufacturing method as claimed in claim 5, wherein, in preparing the SOI wafer (100), the single-crystal silicon thin film layer (110) is doped with p-type boron impurities by ion implantation at a concentration of 5e17 to 5e18 cm-3.

7. The manufacturing method as claimed in claim 5 or 6, wherein forming the holes comprises:
stacking the photoresist (170) on the single-crystal silicon thin film layer (110);
forming the hole pattern (150) including microholes with a micrometer-scale diameter by using a light source; and
dry-etching the single-crystal silicon thin film layer (110) exposed through the hole pattern (150) by using a reactive ion etching (RIE) process.

8. The manufacturing method as claimed in claim 7, wherein a thickness of the photoresist (170) is 300 to 600 nm, and/or
wherein the hole pattern (150) is configured such that the microholes have a diameter of 3 µm and are arranged at intervals of 50 µm.

9. The manufacturing method as claimed in any one of claims 5 to 8, wherein, in removing the oxide film, the insulating oxide film layer (120) is removed by putting the SOI wafer (100) provided with the hole pattern (150) formed thereon into a hydrofluoric acid solution.

10. The manufacturing method as claimed in any one of claims 5 to 9, wherein moving the single-crystal silicon thin film layer (110) comprises:
separating the single-crystal silicon thin film layer (110) from the base wafer layer (130) using a polydimethylsiloxane (PDMS) stamp;
spin-coating the backing part (40) formed of a polyimide film with liquid polyimide, and after the spin-coating, soft-baking the backing part (40); and
transferring the single-crystal silicon thin film layer (110) separated by the PDMS stamp to the backing part (40) after the soft-baking, and optionally
wherein removing the photoresist (170) comprises:
removing the photoresist (170) using acetone; and
hard-baking the backing part (40) provided with the single-crystal silicon thin film layer (110) transferred thereto after removing the photoresist (170), and optionally
wherein:
for the soft-baking, curing is performed at a temperature of 100 to 110 °C for 30 to 50 seconds; and
for the hard-baking, curing is performed at a temperature of 195 to 205 °C for 2 hours.

11. The manufacturing method as claimed in any one of claims 5 to 10, wherein patterning the single-crystal silicon thin film layer (110) comprises:
applying the photolithography process to the single-crystal silicon thin film layer (110); and
forming the strain gauge (20) by dry-etching the single-crystal silicon thin film layer (110) into a zigzag shape or a serpentine shape using a reactive ion etching (RIE) process, and/or
wherein the metal film (180) comprises at least one of copper, aluminum, gold, or silver, and/or
wherein forming the encapsulation part (40) comprises:
stacking epoxy on the backing part (10) configured to surround the strain gauge (20) and the wiring part (30); and
processing the epoxy stacked on the backing part (10) into a shape of the encapsulation part (40) through the photolithography process to expose a portion of the wiring part (30).

12. A secondary battery (200) comprising:
a case (210) configured to surround an exterior of an electrode assembly (220); and
a strain sensor (1) attached to an exterior of the case (210), the strain sensor (1) configured to detect deformation of the case (210),
wherein the strain sensor (1) is as claimed in any one of claims 1 to 4, and
wherein the backing part (10) is attached to the exterior of the case (210).

## Patentansprüche

1. Dehnungssensor (1), umfassend:
einen Trägerteil (10), der an einem Äußeren eines Gehäuses einer Sekundärbatterie (200) befestigt werden kann,
einen Dehnungsmessstreifen (20), der auf dem Trägerteil (10) installiert und aus einkristallinem Silizium geformt ist;
einen Verdrahtungsteil (30), der, zusammen mit dem Dehnungsmessstreifen (20), auf dem Trägerteil (10) geschichtet und elektrisch mit dem Dehnungsmessstreifen (20) verbunden ist; und
einen Einkapselungsteil (40), der am Trägerteil (10) befestigt und dafür konfiguriert ist, den Dehnungsmessstreifen (20) und den Verdrahtungsteil (30), mit Ausnahme eines Abschnitts des Verdrahtungsteils (30), zu umschließen,
**dadurch gekennzeichnet, dass** der Trägerteil (10) Folgendes umfasst:
eine erste Verformungsschicht (12), die so angeordnet ist, dass sie mit einem Äußeren der Sekundärbatterie (200) in Kontakt steht;
eine zweite Verformungsschicht (16), die sich oberhalb der ersten Verformungsschicht (12) befindet; und
eine Grenzschicht (14), die sich zwischen der ersten Verformungsschicht (12) und der zweiten Verformungsschicht (16) befindet;
wobei die erste Verformungsschicht (12) so konfiguriert ist, dass sie einer Druckverformung unterliegt, und die zweite Verformungsschicht (16) so konfiguriert ist, dass sie als Reaktion auf ein Quellphänomen der Sekundärbatterie (200) einer Zugverformung unterliegt.

2. Dehnungssensor (1) nach Anspruch 1, wobei eine Dicke des Trägerteils (10) das Zehnfache oder mehr einer Dicke des Einkapselungsteils beträgt.

3. Dehnungssensor (1) nach Anspruch 1 oder 2, wobei der Trägerteil (10) Polyimid umfasst.

4. Dehnungssensor (1) nach Anspruch 1, 2 oder 3, wobei:
eine Dicke des Dehnungsmessstreifens (20) 100 bis 300 nm beträgt und
eine Dicke des Trägerteils (10) 10 bis 50 µm beträgt.

5. Herstellungsverfahren eines Dehnungssensors (1), umfassend:
Vorbereiten eines Silizium-auf-Isolator- (SOI)-Wafers (100), der so konfiguriert ist, dass eine einkristalline Silizium-Dünnfilmschicht (110), eine isolierende Oxidfilmschicht (120) und eine Basis-Waferschicht (130) nacheinander geschichtet sind;
Bilden von Löchern durch Bilden eines Lochmusters (150) in der einkristallinen Silizium-Dünnfilmschicht (110) unter Verwendung eines Fotolithographieprozesses;
Entfernen eines Oxidfilms durch Entfernen der isolierenden Oxidfilmschicht (120) vom SOI-Wafer (100);
Bewegen der einkristallinen Silizium-Dünnfilmschicht (110) von der Basis-Waferschicht (130) zu einem Trägerteil (10), wobei der Trägerteil (10) Folgendes umfasst:
eine erste Verformungsschicht (12), die so angeordnet ist, dass sie mit einem Äußeren der Sekundärbatterie (200) in Kontakt steht;
eine zweite Verformungsschicht (16), die sich oberhalb der ersten Verformungsschicht (12) befindet; und
eine Grenzschicht (14), die sich zwischen der ersten Verformungsschicht (12) und der zweiten Verformungsschicht (16) befindet;
Entfernen eines Fotolacks (170), der auf der einkristallinen Silizium-Dünnfilmschicht (110) verbleibt;
Strukturieren der einkristallinen Silizium-Dünnfilmschicht (110), um einen Dehnungsmessstreifen (20) zu bilden unter Verwendung von Maskierungs- und Ätzprozessen;
Bilden eines Verdrahtungsteils (30) durch Aufbringen eines Metallfilms (180), der so konfiguriert ist, dass er der Verdrahtungsteil (30) ist, auf ein Äußeres des Trägerteils (10) und durch Durchführen des Fotolithographieprozesses; und
Bilden eines Einkapselungsteils (40), der so konfiguriert ist, dass er den Dehnungsmessstreifen (20) und den Verdrahtungsteil (30) umschließt, auf dem Trägerteil (10),
wobei die erste Verformungsschicht (12) so konfiguriert ist, dass sie einer Druckverformung unterliegt, und die zweite Verformungsschicht (16) so konfiguriert ist, dass sie als Reaktion auf ein Quellphänomen der Sekundärbatterie (200) einer Zugverformung unterliegt.

6. Herstellungsverfahren nach Anspruch 5, wobei, beim Vorbereiten des SOI-Wafers (100), die einkristalline Silizium-Dünnfilmschicht (110) durch Ionenimplantation mit p-leitenden Bor-Verunreinigungen bei einer Konzentration von 5e17 bis 5e18 cm-3 dotiert wird.

7. Herstellungsverfahren nach Anspruch 5 oder 6, wobei das Bilden der Löcher Folgendes umfasst:
Schichten des Fotolacks (170) auf die einkristalline Silizium-Dünnfilmschicht (110);
Bilden des Lochmusters (150), das Mikrolöcher mit einem Durchmesser im Mikrometerbereich einschließt, durch Verwendung einer Lichtquelle; und
Trockenätzen der durch das Lochmuster (150) freigelegten einkristallinen Silizium-Dünnfilmschicht (110) durch Verwendung eines Prozesses des reaktiven Ionenätzens (RIE).

8. Herstellungsverfahren nach Anspruch 7, wobei eine Dicke des Fotolacks (170) 300 bis 600 nm beträgt und/oder
wobei das Lochmuster (150) so konfiguriert ist, dass die Mikrolöcher einen Durchmesser von 3 µm aufweisen und in Abständen von 50 µm angeordnet sind.

9. Herstellungsverfahren nach einem der Ansprüche 5 bis 8, wobei, beim Entfernen des Oxidfilms, die isolierende Oxidfilmschicht (120) entfernt wird, indem der mit dem darauf gebildeten Lochmuster (150) versehene SOI-Wafer (100) in eine Flusssäurelösung eingebracht wird.

10. Herstellungsverfahren nach einem der Ansprüche 5 bis 9, wobei das Bewegen der einkristallinen Silizium-Dünnfilmschicht (110) Folgendes umfasst:
Trennen der einkristallinen Silizium-Dünnfilmschicht (110) von der Basis-Waferschicht (130) unter Verwendung eines Polydimethylsiloxan- (PDMS)-Stempels;
Rotationsbeschichten des Trägerteils (40), der aus einem Polyimidfilm geformt ist, mit flüssigem Polyimid und nach dem Rotationsbeschichten Weichtempern des Trägerteils (40) und
Übertragen der durch den PDMS-Stempel abgetrennten einkristallinen Silizium-Dünnfilmschicht (110) auf den Trägerteil (40) nach dem Weichtempern, und wahlweise,
wobei das Entfernen des Fotolacks (170) Folgendes umfasst:
Entfernen des Fotolacks (170) unter Verwendung von Aceton und
Harttempern des Trägerteils (40), der mit der einkristallinen Silizium-Dünnfilmschicht (110) versehen ist, die nach dem Entfernen des Fotolacks (170) auf denselben übertragen wurde, und wahlweise,
wobei:
zum Weichtempern das Aushärten bei einer Temperatur von 100 bis 110 °C für 30 bis 50 Sekunden durchgeführt wird und
zum Harttempern das Aushärten bei einer Temperatur von 195 bis 205 °C für 2 Stunden durchgeführt wird.

11. Herstellungsverfahren nach einem der Ansprüche 5 bis 10, wobei das Strukturieren der einkristallinen Silizium-Dünnfilmschicht (110) Folgendes umfasst:
Anwenden des Fotolithographieprozesses auf die einkristalline Silizium-Dünnfilmschicht (110); und
Bilden des Dehnungsmessstreifens (20) durch Trockenätzen der einkristallinen Silizium-Dünnfilmschicht (110) in eine Zickzackform oder eine Serpentinenform unter Verwendung eines Prozesses des reaktiven Ionenätzens (RIE) und/oder,
wobei der Metallfilm (180) mindestens eines von Kupfer, Aluminium, Gold oder Silber umfasst und/oder
wobei das Bilden des Einkapselungsteils (40) Folgendes umfasst:
Schichten von Epoxidharz auf dem Trägerteil (10), der so konfiguriert ist, dass er den Dehnungsmessstreifen (20) und den Verdrahtungsteil (30) umschließt; und
Bearbeiten der auf dem Trägerteil (10) geschichteten Epoxidschicht zu einer Form des Einkapselungsteils (40) durch den Fotolithographieprozess, um einen Abschnitt des Verdrahtungsteils (30) freizulegen.

12. Sekundärbatterie (200), umfassend:
ein Gehäuse (210), das so konfiguriert ist, dass es ein Äußeres einer Elektrodenbaugruppe (220) umschließt; und
einen Dehnungssensor (1), der an einem Äußeren des Gehäuses (210) befestigt ist, wobei der Dehnungssensor (1) so konfiguriert ist, dass er eine Verformung des Gehäuses (210) erfasst,
wobei der Dehnungssensor (1), wie in einem der Ansprüche 1 bis 4 beansprucht ist, und
wobei der Trägerteil (10) an dem Äußeren des Gehäuses (210) befestigt ist.

## Revendications

1. Capteur de contrainte (1) comprenant :
une partie support (10) fixable à l'extérieur d'un boîtier d'une batterie secondaire (200),
une jauge de contrainte (20) installée sur la partie support (10) et formée de silicium monocristallin ;
une partie de câblage (30) empilée sur la partie support (10), ainsi que la jauge de contrainte (20), et connectée électriquement à la jauge de contrainte (20) ; et
une partie d'encapsulation (40) fixée à la partie support (10) et configurée pour entourer la jauge de contrainte (20) et la partie de câblage (30) à l'exclusion d'une portion de la partie de câblage (30),
**caractérisé en ce que** la partie support (10) comprend :
une première couche de déformation (12) disposée de manière à être en contact avec l'extérieur de la batterie secondaire (200) ;
une seconde couche de déformation (16) située au-dessus de la première couche de déformation (12) ; et
une couche limite (14) située entre la première couche de déformation (12) et la seconde couche de déformation (16) ;
dans lequel la première couche de déformation (12) est configurée pour subir une contrainte de compression et la seconde couche de déformation (16) est configurée pour subir une contrainte de traction en réponse à un phénomène de gonflement de la batterie secondaire (200).

2. Capteur de contrainte (1) selon la revendication 1, dans lequel l'épaisseur de la partie support (10) est 10 fois ou plus l'épaisseur de la partie d'encapsulation.

3. Capteur de contrainte (1) selon la revendication 1 ou 2, dans lequel la partie support (10) comprend du polyimide.

4. Capteur de contrainte (1) selon la revendication 1, 2 ou 3, dans lequel :
l'épaisseur de la jauge de contrainte (20) est comprise entre 100 et 300 nm ; et
l'épaisseur de la partie support (10) est comprise entre 10 et 50 µm.

5. Procédé de fabrication d'un capteur de contrainte (1) comprenant :
la préparation d'une plaquette de silicium sur isolant (SOI) (100) configurée de sorte qu'une couche de film mince de silicium monocristallin (110), une couche de film d'oxyde isolant (120) et une couche de plaquette de base (130) soient empilées séquentiellement ;
la formation de trous en formant un motif de trous (150) dans la couche de film mince de silicium monocristallin (110) à l'aide d'un processus de photolithographie ;
l'élimination d'un film d'oxyde en retirant la couche de film d'oxyde isolante (120) de la plaquette SOI (100) ;
le déplacement de la couche de film mince de silicium monocristallin (110) de la couche de plaquette de base (130) vers une partie support (10), dans lequel la partie support (10) comprend :
une première couche de déformation (12) disposée de manière à être en contact avec l'extérieur de la batterie secondaire (200) ;
une seconde couche de déformation (16) située au-dessus de la première couche de déformation (12) ; et
une couche limite (14) située entre la première couche de déformation (12) et la seconde couche de déformation (16) ;
l'élimination d'une photorésine (170) restant sur la couche de film mince de silicium monocristallin (110) ;
la structuration de la couche de film mince de silicium monocristallin (110) pour former une jauge de contrainte (20) à l'aide de processus de masquage et de gravure ;
la formation d'une partie de câblage (30) en déposant un film métallique (180) configuré pour être la partie de câblage (30) sur une face extérieure de la partie support (10) et en réalisant le processus de photolithographie ; et
la formation d'une partie d'encapsulation (40) sur la partie support (10) configurée pour entourer la jauge de contrainte (20) et la partie de câblage (30),
dans lequel la première couche de déformation (12) est configurée pour subir une contrainte de compression et la seconde couche de déformation (16) est configurée pour subir une contrainte de traction en réponse à un phénomène de gonflement de la batterie secondaire (200).

6. Procédé de fabrication selon la revendication 5, dans lequel lors de la préparation de la plaquette SOI (100), la couche de film mince de silicium monocristallin (110) est dopée avec des impuretés de bore de type p par implantation ionique à une concentration de 5e17 à 5e18 cm-3.

7. Procédé de fabrication selon la revendication 5 ou 6, dans lequel la formation des trous comprend :
l'empilage de la photorésine (170) sur la couche de film mince de silicium monocristallin (110) ;
la formation du motif de trous (150) incluant des microtrous d'un diamètre micrométrique à l'aide d'une source lumineuse ; et
la gravure sèche de la couche de film mince de silicium monocristallin (110) exposée à travers le motif de trous (150) en utilisant un processus de gravure ionique réactive (RIE).

8. Procédé de fabrication selon la revendication 7, dans lequel l'épaisseur de la photorésine (170) est comprise entre 300 et 600 nm, et/ou
dans lequel le motif de trous (150) est configuré de sorte que les microtrous présentent un diamètre de 3 µm et soient disposés à intervalles de 50 µm.

9. Procédé de fabrication selon l'une quelconque des revendications 5 à 8, dans lequel lors de l'élimination du film d'oxyde, la couche de film d'oxyde isolante (120) est éliminée en plaçant la plaquette SOI (100) munie du motif de trous (150) formé sur celle-ci dans une solution d'acide fluorhydrique.

10. Procédé de fabrication selon l'une quelconque des revendications 5 à 9, dans lequel le déplacement de la couche de film mince de silicium monocristallin (110) comprend :
la séparation de la couche de film mince de silicium monocristallin (110) de la couche de plaquette de base (130) à l'aide d'un tampon en polydiméthylsiloxane (PDMS) ;
le revêtement par centrifugation de la partie support (40) formée d'un film de polyimide avec du polyimide liquide, et après le revêtement par centrifugation, la cuisson douce de la partie support (40) ; et
le transfert de la couche de film mince de silicium monocristallin (110) séparée par le tampon en PDMS sur la partie support (40) après la cuisson douce, et éventuellement
dans lequel l'élimination de la photorésine (170) comprend :
l'élimination de la photorésine (170) à l'aide d'acétone ; et
la cuisson dure de la partie support (40) munie de la couche de film mince de silicium monocristallin (110) transférée sur celle-ci après élimination de la photorésine (170), et éventuellement
dans lequel :
pour la cuisson douce, le durcissement est effectué à une température de 100 à 110 °C pendant 30 à 50 secondes ; et
pour la cuisson dure, le durcissement est effectué à une température de 195 à 205 °C pendant 2 heures.

11. Procédé de fabrication selon l'une quelconque des revendications 5 à 10, dans lequel la structuration de la couche de film mince de silicium monocristallin (110) comprend :
l'application du processus de photolithographie à la couche de film mince de silicium monocristallin (110) ; et
la formation de la jauge de contrainte (20) en gravant à sec la couche de film mince de silicium monocristallin (110) en forme de zigzag ou en forme serpentine à l'aide d'un processus de gravure ionique réactive (RIE), et/ou
dans lequel le film métallique (180) comprend au moins un parmi le cuivre, l'aluminium, l'or ou l'argent et/ou
dans lequel la formation de la partie d'encapsulation (40) comprend :
l'empilement d'époxy sur la partie support (10) configurée pour entourer la jauge de contrainte (20) et la partie de câblage (30) ; et
le traitement de l'époxy empilée sur la partie support (10) en une forme de la partie d'encapsulation (40) par le processus de photolithographie pour exposer une portion de la partie de câblage (30).

12. Batterie secondaire (200) comprenant :
un boîtier (210) configuré pour entourer l'extérieur d'un ensemble d'électrodes (220) ; et
un capteur de contrainte (1) fixé à l'extérieur du boîtier (210), le capteur de contrainte (1) étant configuré pour détecter la déformation du boîtier (210),
dans lequel le capteur de contrainte (1) est conforme à l'une quelconque des revendications 1 à 4, et
dans lequel la partie support (10) est fixée à l'extérieur du boîtier (210).
